# EUROPÄISCHE PATENTANMELDUNG

(11) **EP 1 352 557 A1**
(43) Veröffentlichungstag der Anmeldung: **15.10.2003**
(21) Anmeldenummer: 03007282.1
(22) Anmeldetag: 31.03.2003
(51) Int. Cl.: A01J 5/08, A01J 7/02

(54) **Vorrichtung zur Belüftung eines zur Führung eines flüssigen Mediums bestimmten Raums**

(30) Priorität: 08.04.2002 DE 10215437
(71) Anmelder: Happel, Fritz, D-87650 Baisweil (DE); Happel, Werner, 87650 Baisweil (DE)
(72) Erfinder: Happel, Fritz, D-87650 Baisweil (DE); Happel, Werner, 87650 Baisweil (DE)
(74) Vertreter: Manitz, Finsterwald & Partner GbR

(57) **Zusammenfassung**

Es wird eine Vorrichtung zum Sammeln und insbesondere periodischen Abführen eines flüssigen Mediums aus einem über wenigstens eine Düse (5) belüftbaren Raum, insbesondere einem Melkbecherinnenraum, beschrieben, bei der in der Düsenöffnung ein in Axial- und Radialrichtung frei bewegliches Reinigungselement (6) selbsthaltend angeordnet ist.

## Beschreibung

Die Erfindung betrifft eine Vorrichtung zum Sammeln und insbesondere periodischen Abführen eines flüssigen Mediums aus einem über wenigstens eine Düse belüftbaren Raum. Insbesondere betrifft die Erfindung Melkbecher oder Milchsammelstücke, in die mittels Lufteinlassdüsen zur Förderung des Milchflusses Atmosphäre eingeleitet wird.

In der Praxis bereitet es erhebliche Schwierigkeiten, die Öffnungen derartiger Lufteinlassdüsen während des Betriebs im offenen Zustand zu halten und zu verhindern, dass diese im Regelfall einen kleinen Öffnungsquerschnitt besitzenden Düsen ganz oder teilweise durch Umwelteinflüsse oder durch Medienablagerungen verstopft werden.
Besonders ausgeprägt ist diese Problematik in der Melktechnik, wo zur Gewährleistung eines guten Milchabflusses aus Melkbechern oder Sammelstücken derartige Lufteinlassdüsen notwendig sind. Durch Verschmutzung, Ablagerungen oder auch Insekten werden diese für die Funktion der Einheit wichtigen Düsen immer wieder durch Verstopfung unwirksam. Erforderliche Reinigungsarbeiten werden häufig nicht im erforderlichen Ausmaß und häufig auch nicht sorgfältig genug durchgeführt, so dass zumindest zeitweise wirksam werdende Funktionsstörungen vorprogrammiert sind.

Aufgabe der Erfindung ist es, die vorstehend geschilderten Nachteile zu beseitigen und sicherzustellen, dass ohne erforderliches manuelles Eingreifen die Düsenbohrungen auch im Langzeitbetrieb frei bleiben und immanent vorhandene Verstopfungsgefahren ausgeschaltet werden. Gelöst wird diese Aufgabe nach der Erfindung im Wesentlichen dadurch, dass in der Düsenöffnung ein in Axial- und Radialrichtung frei bewegliches Reinigungselement selbsthaltend angeordnet ist. Durch dieses praktisch allseitig bewegliche Reinigungselement werden die Seitenflächen der Düse freigehalten, da dieses Reinigungselement während des Einströmens der Luft zum jeweiligen Innenraum auch Taumelbewegungen ausführt und damit durch die ständig auftretenden Reibungseffekte an der die Düsenöffnung begrenzenden Wandung eine immer wieder zwangsläufig wirksam werdende Reinigung der Düse erreicht wird.

Im Zusammenhang mit der Anwendung der Erfindung bei einem Melkbecher werden die angestrebten Reinigungseffekte besonders wirksam erreicht, da während des Einströmens der Luft zum Melkbecherinnenraum und insbesondere auch beim Ein- bzw. Ausschalten des Vakuums im Innenraum ausgeprägte Längs-Quer- und Taumelbewegungen des Reinigungselements erhalten werden. Hinzu kommt, dass die Seitenbeweglichkeit des bevorzugt als Nadel ausgebildeten Reinigungselements im differenzdruckfreien Zustand an der Düse durch Handhabung und Bewegung zu weiteren bzw. ergänzenden Reinigungseffekten beiträgt.

Die verwendete Reinigungsnadel wird bevorzugt über ihren Umfang kantig oder mit Erhebungen ausgebildet, um eine Verstärkung der Reinigungswirkung zu erzielen.

Die Selbsthaltung der Reinigungsnadel in der Düse wird durch Querschnittserweiterungen der Nadel oder an der Nadel vorgesehene Anschläge realisiert, deren Formgebung einen Verschluss der Düsenöffnung verhindert. Beispielsweise eignen sich dazu flach gedrückte Abschnitte der Nadel, deren Größe so gewählt wird, dass im Normalbetrieb der Vorrichtung die Reinigungsnadel stets sicher in der Düsenöffnung mit dem entsprechenden Spiel gehalten wird. Außerdem wird allein durch das über die Düse vorstehende Ende der Reinigungsnadel jegliche Verstopfung zusätzlich weitgehend verhindert.

Nach einer bevorzugten Ausführungsform schließt sich an die Düse zu dem zu belüftenden Innenraum hin ein Verbindungskanal an, der einen im Vergleich zur Düsenöffnung erweiterten Querschnitt aufweist. Vorteilhafterweise erweitert sich der Querschnitt dieses Verbindungskanals zum Innenraum hin zunehmend, insbesondere ist der Kanal konisch ausgebildet. Nach einem weiteren Merkmal der Erfindung besitzt die Reinigungsnadel zum Innenraum hin einen Verlängerungsabschnitt, der im erwähnten Verbindungskanal als Reinigungselement wirkt. An seinem innenraumseitigen Ende ist der Verlängerungsabschnitt bevorzugt mit einem Prallteller versehen, der in der Endstellung den Verschluss des Verbindungskanals bewirkt und/oder durch vorgesehene Anströmflächen eine Drehung der Reinigungsnadel verursacht, wenn der Kanal von Atmosphärenluft durchströmt wird.

Im Falle eines Melkbechers sind Düse und Verlängerungskanal gemäß einer möglichen Ausführungsform in einem Melkbecherschauglas zwischen dem Milchabführungskanal und der Zitzengummieinspannstelle vorgesehen. Nach einer weiteren Ausgestaltung der Erfindung ist die Düse im Bereich des Kopfraums des Zitzenschlauchs in dessen Wandung vorgesehen.

Besonders vorteilhaft ist es aber auch, Düse und Verlängerungskanal unmittelbar in einen Zitzengummi benachbart dem vorzugsweise einteilig mit dem Zitzenschlauch ausgebildeten Milchabführungsschlauch zu integrieren. In diesem Falle sind Düse und Verbindungskanal praktisch in einem flexiblen Material ausgebildet, was das Einbringen der Reinigungsnadel erleichtert, da deren endseitiger Ansatz unter Aufweitung der Düse durch die Düsenöffnung geschoben werden kann.
Schließlich zeichnet sich eine weitere Ausgestaltung der Erfindung dadurch aus, dass in einer Melkbecherhülse, in der der den Innenraum begrenzende Zitzenschlauch gehaltert ist, eine schräg verlaufende Seitenkanten aufweisende Aussparung vorgesehen und die Düse mit Reinigungsnadel im Scheitelbereich des formschlüssig in die Aussparung eingreifenden Zitzenschlauchs vorgesehen ist.

Die Erfindung wird nachfolgend anhand von Ausführungsbeispielen unter Bezugnahme auf die Zeichnung noch näher erläutert; in der Zeichnung zeigt:
- Fig. 1: eine schematische Längsschnittdarstellung eines erfindungsgemäßen Melkbechers mit speziell ausgestalteter Lufteinlassdüse, und
- Fig. 2: eine schematische Teil-Seitenansicht einer Ausführungsvariante eines Melkbechers nach der Erfindung.

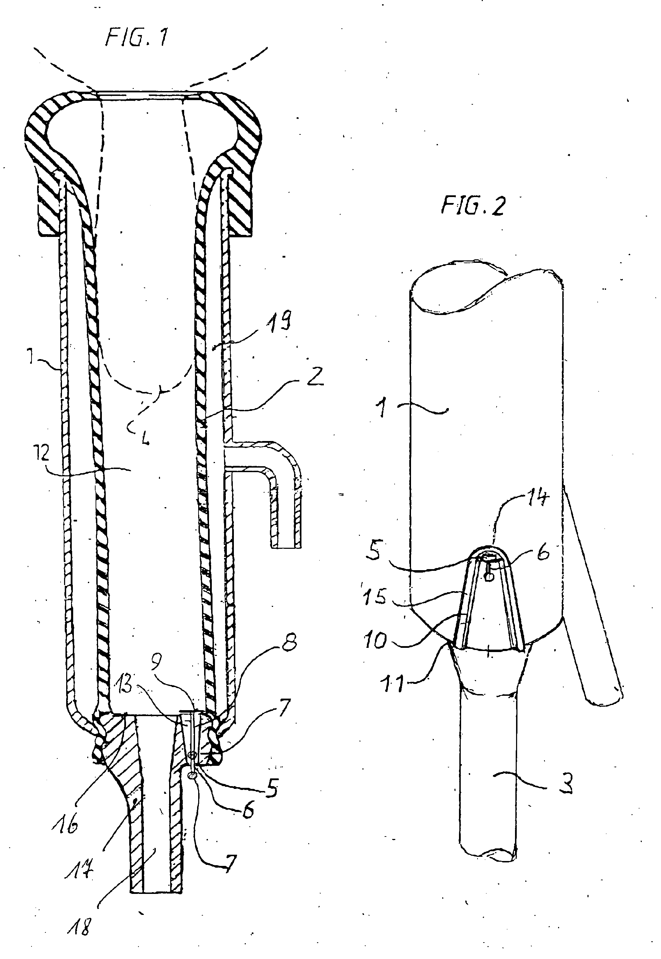

Fig. 1 zeigt eine Melkbecherhülse 1 mit einem darin in herkömmlicher Weise eingespannten Zitzenschlauch 2. Der Zwischenraum 19 zwischen Zitzenschlauch 2 und Melkbecherhülse 1 wird über einen entsprechenden Anschluss periodisch beispielsweise mit Vakuum und Atmosphäre beaufschlagt. Der die jeweilige Zitze 4 aufnehmende Zitzengummi-Innenraum 12 dient während des jeweiligen Melkvorgangs zur Sammlung und Abführung von Milch über einen Milchabführungskanal 18, der in einem so genannten Melkbecherschauglas 17 ausgebildet ist, das zusammen mit der Melkbecherhülse 1 zum Einspannen des unteren Endes des Zitzenschlauchs 2 dient. Der Innenraum 12 steht während des Melkens zumindest im Saugtakt unter Melkvakuum.

Am unteren Ende des Zitzengummiinnenraums 12 ist eine Düse 5 vorgesehen, über die Atmosphärenluft in den Innenraum 12 eintreten kann, wie dies erforderlich ist, um die ermolkene Milch in der gewünschten Weise abführen zu können.

Im dargestellten Ausführungsbeispiel ist diese Düse 5 im Melkbecherschauglas 17 ausgebildet und befindet sich im Bereich der außenliegenden Wandung dieses Schauglases. Ausgehend von der Düse 5 erstreckt sich in Richtung des Innenraums 12 ein sich bevorzugt konisch erweiternder Verbindungskanal 13, der in den Innenraum 12 mündet.

Wesentlich ist dabei, dass sich durch die Düsenöffnung eine Reinigungsnadel 6 erstreckt, die vorzugsweise beidseitig der Düsenöffnung mit einem Anschlag 7 versehen ist, so dass die Reinigungsnadel 6 selbsthaltend in der Düse geführt ist.

Die Anschläge 7 sind durch Formgebung so gestaltet, dass sie die Düsenöffnung selbst nicht verschließen können. Beispielsweise können die Anschläge aus flachgedrückten Nadelbereichen bestehen.

Die Reinigungsnadel 6 ist vorzugsweise in Richtung des Innenraums 12 mit einem Verlängerungsabschnitt 8 versehen, der sich durch den Verbindungskanal 13 erstreckt und endseitig eine Prallplatte 9 trägt. Dieser Verlängerungsabschnitt 8 der Reinigungsnadel 6 hält den Verbindungskanal 13 frei, und der am Verlängerungsabschnitt vorgesehene Prallteller 9 verhindert eine unerwünscht scharfe Luftströmung in den Innenraum 12.

Nach einer speziellen Ausgestaltung kann dieser Prallteller so gestaltet sein, dass er für die einströmende Luft Anströmflächen darstellt, die die Reinigungsnadel 6 in Drehung versetzen.

Es ist anhand der Fig. 1 auch ersichtlich, dass Zitzenschlauch 2 und das vom Melkbecherschauglas 17 gebildete Teil zu einer einstückigen Gesamtkonstruktion aus flexiblem Material zusammengefasst werden können. In diesem Falle sind dann die Düse 5 und der Verbindungskanal 13 im elastischen Material ausgebildet, was das Einsetzen der Reinigungsnadel in die Düse erleichtert, da dazu die Düsenöffnung durch den im Vergleich zu ihr zumindest in einer Richtung größere Abmessungen aufweisenden Anschlag 7 kurzzeitig beim Durchstecken aufgeweitet werden kann.

Im Falle der Ausführungsform nach Fig. 1 mündet der sich an die Düse 5 anschließende Verbindungskanal 13 im Bereich der innenraumseitigen Fläche 16 des Schauglases 17. Prinzipiell analog gilt dies auch für den Fall der einteiligen Ausbildung von Zitzenschlauch 2 und Milchabführungskanal 18, wobei hier jedoch durch die Vorgabe der Zitzenschlauchkonstruktion die Mündung des Verbindungskanals 13 weiter in den Zitzengummiinnenraum 12 hinein verlagert werden kann. Dies erleichtert dann auch die Realisierung eines Vakuumabschlusses im Zitzengummiinnenraum, zum Beispiel die Realisierung eines Schrägabschlusses, wie er vom Anmelder in einer zeitlichen früheren PCT-Anmeldung beschrieben worden ist.

Fig. 2 zeigt ein Ausführungsbeispiel eines erfindungsgemäßen Melkbechers mit in der Lufteinlassdüse vorgesehenem Reinigungselement im Falle eines mit einem Milchschlauch 3 einstückig gespritzten Zitzenschlauchs 2. Eine Besonderheit dieser Ausführungsform besteht darin, dass die Melkbecherhülse 1 eine Aussparung 14 mit schrägen Flanken 10 aufweist, welche zur formschlüssigen Aufnahme und Abdichtung des Zwischenraums 19 mittels Dichtlippen 15 des unteren Teils des Zitzenschlauchs 2 dient, der in diesem Bereich komplementär gestaltet ist. Bei dieser Konstruktion befindet sich die Düse 5 oberhalb der unteren Zitzengummi-Einspannstelle 12 und nicht unmittelbar im Bereich dieser Einspannstelle, wie dies die Fig. 1 zeigt.
Vorteilhaft ist bei dieser Ausführungsform nicht nur eine durch die Aussparung 14 realisierte Verdrehsicherung des Zitzenschlauchs 2, sondern vor allem die Tatsache, dass der sich an die Düse anschließende Verbindungskanal ausgesprochen kurz ausgebildet werden kann, was die Freihaltung des Kanals begünstigt.

Besonders vorteilhaft ist dabei ferner, dass die Seitenkanten 10 der Aussparung 14 konisch verlaufen, da dadurch bei üblicher Längsspannung des Zitzenschlauchs 2 ein seitlicher Anpressdruck und damit eine besonders sichere Abdichtung des Zwischenraums 19 zwischen Zitzenschlauch 2 und Melkbecherhülse 1 erreicht wird.

### Bezugszeichenliste

- 1: Melkbecherhülse
- 2: Zitzenschlauch
- 3: Milchschlauch mit angespritztem Zitzenschlauch
- 4: Zitze
- 5: Düse
- 6: Reinigungsnadel
- 7: Anschläge
- 8: Verlängerungsabschnitt
- 9: Prallteller
- 10: Seitenkanten
- 11: untere Einspannstelle
- 12: Zitzengummiinnenraum
- 13: Verbindungskanal
- 14: Aussparung
- 15: Dichtlippen
- 16: Begrenzungswand
- 17: Melkbecherschauglas
- 18: Milchabführungskanal
- 19: Zwischenraum

## Patentansprüche

1. Vorrichtung zum Sammeln und insbesondere periodischen Abführen eines flüssigen Mediums aus einem über wenigstens eine Düse (5) belüftbaren Raum (12),
**dadurch gekennzeichnet,**
**dass** in der Düsenöffnung ein in Axial- und Radialrichtung frei bewegliches Reinigungselement (6) selbsthaltend angeordnet ist.

2. Vorrichtung nach Anspruch 1,
**gekennzeichnet durch,**
die Ausbildung als Melkbecher oder Milchsammelstück mit milchführendem Innenraum (12) und Verbindung zur Atmosphäre über die Düse (5).

3. Vorrichtung nach Anspruch 1 oder 2,
**dadurch gekennzeichnet,**
**dass** das Reinigungselement (6) nadelförmig und insbesondere mit eckigem Querschnitt ausgebildet und beiderseits der Düsenöffnung mit die Selbsthaltefunktion erbringenden Querschnittserweiterungen oder Anschlägen (7) versehen ist, deren Formgebung einen Verschluss der Düsenöffnung verhindert.

4. Vorrichtung nach einem der vorhergehenden Ansprüche,
**dadurch gekennzeichnet,**
**dass** der von Atmosphärenluft durchströmbare freie Querschnitt der Düsenöffnung durch die Differenz zwischen dem Öffnungsquerschnitt der Düse (5) und dem wählbaren Querschnitt der Reinigungsnadel (6) vorgegeben ist.

5. Vorrichtung nach einem der vorhergehenden Ansprüche,
**dadurch gekennzeichnet,**
**dass** die Düse (5) an der vom zu belüftenden Innenraum (12) abgewandten Seite einer den Innenraum (12) auf einem Teilbereich begrenzenden Wandung vorgesehen ist.

6. Vorrichtung nach einem der vorhergehenden Ansprüche,
**dadurch gekennzeichnet,**
**dass** die Düse (5) in der Wandung des Kopfraums des Zitzenschlauchs (2) vorgesehen ist.

7. Vorrichtung nach einem der vorhergehenden Ansprüche,
**dadurch gekennzeichnet,**
**dass** sich an die Düsen (5) zu dem zu belüftenden Innenraum (12) hin ein Verbindungskanal (13) anschließt, der einen im Vergleich zur Düsenöffnung erweiterten und sich vorzugsweise ausgehend von der Düsenöffnung zum Innenraum (12) hin kontinuierlich vergrößernden, insbesondere sich konisch erweiternden Querschnitt aufweist.

8. Vorrichtung nach Anspruch 7,
**dadurch gekennzeichnet,**
**dass** die Reinigungsnadel (6) zum Innenraum (12) hin einen Verlängerungsabschnitt (8) aufweist, der im Verbindungskanal (13) als Reinigungselement wirkt.

9. Vorrichtung nach Anspruch 8,
**dadurch gekennzeichnet,**
**dass** an dem innenraumseitigen Ende des Verlängerungsabschnitts (8) ein Prallteller (9) vorgesehen ist, der in seiner Grundstellung den Verbindungskanal (13) zumindest im Wesentlichen verschließt und/der mit Anströmflächen versehen ist, die bei den Verbindungskanal (13) durchströmender Luft eine Drehung der Reinigungsnadel (6) bewirken.

10. Vorrichtung nach einem der vorhergehenden Ansprüche,
**dadurch gekennzeichnet,**
**dass** Düse (5) und Verlängerungskanal (13) in einem Melkbecher-Schauglas (17) zwischen dem Milchabführungskanal (18) und der Zitzengummieinspannstelle (11) vorgesehen ist.

11. Vorrichtung nach einem der Ansprüche 1 bis 9,
**dadurch gekennzeichnet,**
**dass** die Düse (5) und/oder der Verlängerungsabschnitt (8) in einem flexiblen Material und vorzugsweise im unteren Bereich eines Zitzenschlauchs (2) ausgebildet sind.

12. Vorrichtung nach einem der vorhergehenden Ansprüche,
**dadurch gekennzeichnet,**
**dass** in einer Melkbecherhülse (1), in der der den Zwischenraum (19) begrenzende Zitzenschlauch (2) gehaltert ist, eine schräg verlaufende Seitenkanten (10) aufweisende Aussparung (14) vorgesehen und die Düse (5) mit Reinigungsnadel (6) im Scheitelbereich des formschlüssig in die Aussparung (14) eingreifenden Zitzenschlauchs (2) vorgesehen ist.
